# EUROPEAN PATENT SPECIFICATION

(11) **EP 0 783 456 B1**
(45) Date of publication and mention of the grant of the patent: **17.10.2001**
(21) Application number: 95926807.9
(22) Date of filing: 28.06.1995
(51) Int. Cl.: C01B 17/06, C01B 17/027, C10B 19/00, C04B 2/10

(54) **PROCESS FOR THE REALIZATION OF ENDOTHERMIC DECOMPOSITION OF PYRITES, PRODUCING GASES AND SOLID RESIDUES**
VERFAHREN ZUR DURCHFÜHRUNG ENDOTHERMISCHER ZERSETZUNG VON PYRITEN UNTEN BILDUNG VON GASEN UND FESTEN RÜCKSTÄNDEN
PROCEDE POUR LA REALISATION DE LA DECOMPOSITION ENDOTHERMIQUE DE PYRITES AVEC PRODUCTION DE GAZ ET DE RESIDUS SOLIDES

(43) Date of publication of application: 16.07.1997
(73) Proprietor: LIQUID CARBONIC INDUSTRIAS S/A, 20090-050-Rio de Janeiro, RJ (BR)
(72) Inventor: SADDY, Maury, 24220-020-Niteroi, RJ (BR)
(74) Representative: Jenkins, Peter David
(86) International application number: BR9500032
(87) International publication number: WO9701510

(56) References cited:
- EP-A- 0 505 278
- DE-C- 849 544
- FR-A- 761 260
- US-A- 2 915 374
- US-A- 3 578 417
- US-A- 4 052 265
- US-A- 4 376 034

## Description

The present invention refers to a process for the realization of endothermic reactions for the thermal decomposition, by thermal radiation, of pyrites, pyritic residues of coal and other pyritic concentrates of iron and copper, for the recovery of sulphur and the production of a solid product of industrial value.

DE-C-849544 discloses a method for the pyrolysis of coal; US-A-4052265 discloses a method for the pyrolysis of waste materials; and FR-A-761260 discloses a method for the calcination of limestone.

The existing processes utilize the direct burning of a fuel, fossil or renewable, in the atmosphere of the reaction/process. The fuel can be fuel oil, diesel oil, wood, charcoal, mineral coal, natural gas and others.

In general, the environment in which the reaction takes place is of a defined geometry: a reactor/furnace of the vertical type of a reactor/furnace, horizontal, or rotary with a small slope, as those used in the cement industry.

The direct combustion of the fuel in the environment of the reaction demands a proportional amount of combustion air which contaminates the environment with nitrogen, oxygen in excess, and other air gases.

The burning of the fuel directly in the reaction environment produces particulates, coming from the fuel eventually, and gases from the incomplete combustion such as CO (carbon monoxide), noxious gases such as NOₓ (nitrogen oxides) and SOₓ (sulphur oxides), which get mixed with the product gases of interest produced in the reaction, causing dilution and demanding investments some times high in the units downstream, for the cleaning up and concentration of the desired product gas.

The desired solid product may be contaminated with the gases produced in the direct burning of the fuel in the furnace/reactor environment.

The size of the particles/stones of the solid reactant must be sized between two limits, among which the optimum size to operate the furnace is found: the particles/stones should be large enough to keep the associated costs of size reduction by milling or/and crushing small , and allow the flow of the flue gases with little resistance or with small pressure drops; and should be small enough for the optimum process reaction with the minimum residence time in the reaction zone, without the problem of the particles being dragged by the motion of the gases.

The heat transfer mechanism is essentially by convection of the hot gases, coming from the direct burning of the fuel, with part of the thermal radiation in the burning region, near the combustion flame. This heat transfer mechanism results also from the temperature profile established in the environment of the furnace/reactor, vertical or horizontal (or with a slope), in the direction of the flow of the gases, decreasing the temperature in the direction of the gases outlet, which constitutes a loss of efficiency.

In general, the large mass of refractory of good quality, to form the ambient to the furnace/reactor and/or to protect the external steel plates, structural to the furnace/reactor, constitutes a significant part of the investment, and requires specialized labour of great experience in its installation to avoid the problems related to bad performance, such as penetration of the hot gases in the joints between two adjoining refractory bricks, the rupture of refractory bricks by the uneven temperature gradient on the faces of the bricks (thermal shocks) and undesired heating of the steel plate at high temperatures above those of the plates specification.

The control of the optimum temperature for the process reaction, in the reaction zone of the furnace/reactor requires investment in additional equipment, besides the instrumentation to, for example, recirculate the gases exiting the furnace and therefore colder, to the interior of the furnace/reactor in the reaction zone when the temperature in that region is raised above the adequate values to the process.

The environment of the vertical furnace/reactor is of non-uniform geometry, of sophisticated calculation and drawings to allow a good performance of the furnace/reactor, measured by the following process variables: temperature distribution and the level of temperature reached, the upward flow of the gases, to the uppermost part of the furnace/reactor, the flow of the stones/particles to the lower part of the furnace/reactor whereof they are removed.

In the horizontal (or slightly sloped) reactors, of the type of the rotary cement kilns, the environment of the interior of the furnace is cylindrical and uniform, but the investment in the rotary mechanism is high, together with the joints at the ends of the rotary kilns.

The essence of the present invention is the supply of the thermal energy, necessary to the process, by a thermal radiation mechanism. This mechanism does not require any material medium to transfer heat from one surface to another.

Hence, in essence, the invention deals with processes in which the chemical reactions are carried out with the supply of heat to the particles/stones in an endothermic phenomenon. The utilization of the thermal radiation makes it possible to reach the high temperatures required by the process on the solids, directly from the radiant medium to the solids surface, without the interaction of the other media such as gases or gas mixtures, for example.

The utilization of the thermal radiation allows the heat transfer, essentially by radiation, from one particle or stone to another adjoining, so that all the cross section of the reaction area is maintained essentially at the same temperature which is the desired operation temperature. The stone or the particle which "sees" the radiant surface is heated at first and, hence, its own surface becomes radiant and transfers heat by radiation to the particles/stones in the immediate vicinity, which "see" it until all the particles/stones have reached the same process temperature.

The radiation process to the particles/stones is of a high velocity of transfer, and, therefore, rapid. These high rates of heat transfer allow residence times smaller for the particles/stones, which results in greater production capacity of a given furnace, or in lower volumes/investments for given production capacities.

Because the process reaction takes place by heat diffusion from the stone surface to the interior of the particle/stone, this is the controlling mechanism of the process. Therefore, the faster the elevated temperature of the particle/stone surface reaches the desired level for the process, the better and the faster will be the reaction. The thermal radiation makes it possible to reach that high level of particle/stone surface temperature much more efficiently than in the traditional heating process with hot gases, from the combustion of a fuel (fuel oil, natural gas, coal, others).

In addition, the thermal radiation is clean energy and the gaseous products of the process reaction are one hundred per cent pure, while, in the conventional process, the reaction gases are contaminated with air components such as N₂ (Nitrogen), O₂ (Oxygen), Ar (Argon), from the incomplete combustion such as CO (carbon monoxide) and sulphur derivatives (from the fuel or from solid reactant), such as SO₂.

The burning of fuel or the utilization of electric energy can be made externally to the environment of the reaction/process. Its objective is to heat the boundary surfaces of the environment to the desired reaction temperature, in the range of interest of the thermal radiation.

The fuel can be: fuel oil, diesel oil, wood, charcoal, coal, natural gas. Also, the electric energy can be utilized, etc...

In the present invention there is no restriction to the geometry of the reaction ambient; this can be cylindrical, flat surfaces, spherical, vertical, horizontal or tilted.

The burning of the selected fuel and/or the use of electric energy for the heating are external to the reaction environment, does not interfere with the process and does not contaminate the product gases of the reaction and the solids also products of the reaction. The products of the reaction, gaseous and solids are one hundred percent pure.

In principle, there are no limitations for the solid particles/stones sizes fed to the furnace/reactor, from small particles such as powder, to larger particles, for reasons connected with the size reduction costs economy or milling and/or briquetting; as there are no large amounts of gases in the interior of the furnace/reactor, there will be no dragging and/or elutriation of the small particles.

The heat transfer mechanism occurs essentially by thermal radiation, more efficient if in a confined ambient as this is the case.

The temperature profile in the furnace/reactor is stable and more uniform through the reaction zone and the control of the temperature in this reaction zone is made by the temperatures of the surface boundaries which defined the reaction ambient, more easily, also due to the thermal inertia of these same walls which define the radiation surfaces. The requirement to defined temperatures on the surfaces which enclose the ambient of the furnace/reactor, demands that an adequate material is utilized, such as refractory slabs, for example, which allows the utilization of materials less noble, behind the refractory slabs, such as refractory cement and refractory masses.

A process for the realization of endothermic reactions for the thermal decomposition of pyrites, pyritic residues or pyritic concentrates, producing gases of high purity and residual solid products, in which the pyrites, pyritic residues or pyritic concentrates are fed to a reaction chamber, and are heated by radiation to a temperature between 500°C and 1200°C, causing the thermal decomposition thereof into said residual solid products and said gases, the gases being separated from the solids, and making it possible to recover the heat contained in the products for re-utilization, wherein the heat is obtained from the use of electricity or from the burning/combustion of a fuel done externally to the environment in which the reaction takes place.

The solid materials in the form of the particles/stones are fed to the top of the furnace as raw materials (for example, pyrites), which can pass the reaction zone at a high temperature by thermal radiation in two manners after being pre-heated by the hot gases from the reaction:
1. The fixed bed of particles/stones moves downwards continuously by gravity, caused by a mechanical mechanism to withdraw the particles/stones which are the reacted solids, at the bottom of the furnace/reactor; the velocity downwards is defined to result in the desired residence time in the region of high temperatures in the furnace/reactor.
2. The smaller particles (from powder to some few millimeters in diameter) can flow in the furnace/reactor under free fall, with residence time in the high temperature zone defined and sufficient to absorb by thermal radiation, the necessary heat for the reaction.

The invention applies to gas-solid reactions, which as endothermic reactions, need high temperatures, at which the thermal radiation heat transfer becomes the heat transfer mechanism with significant contribution, or else, the most important contribution. Besides,it also applies to gas-solid reactions in which it is desired the gaseous product as pure product (100%), or in high concentrations and a solid product of high reactivity.

The invention applies to the thermal decomposition of pyrites, pyritic residues and pyritic concentrates, of iron and coppers, at atmospheric pressure :

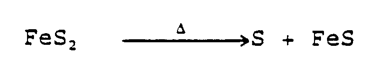

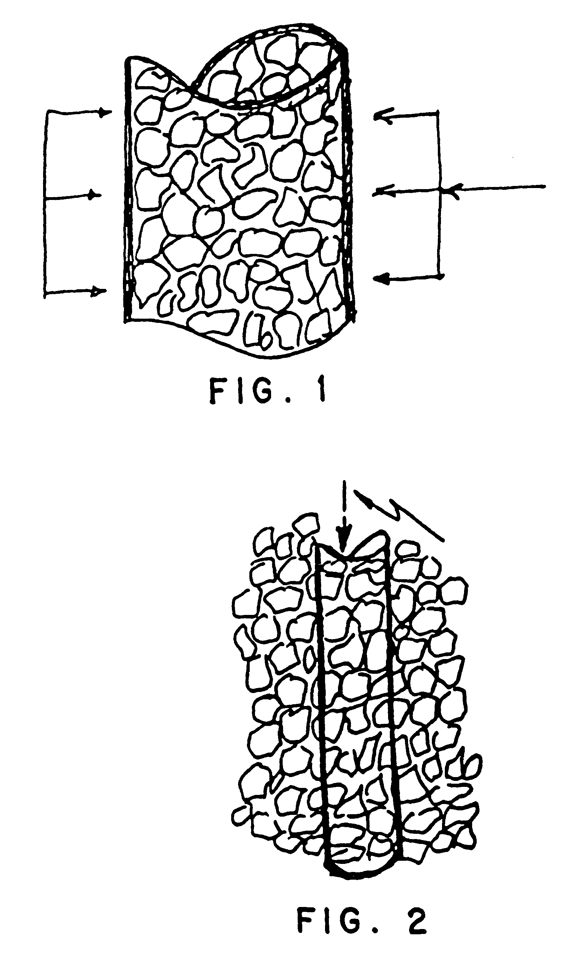

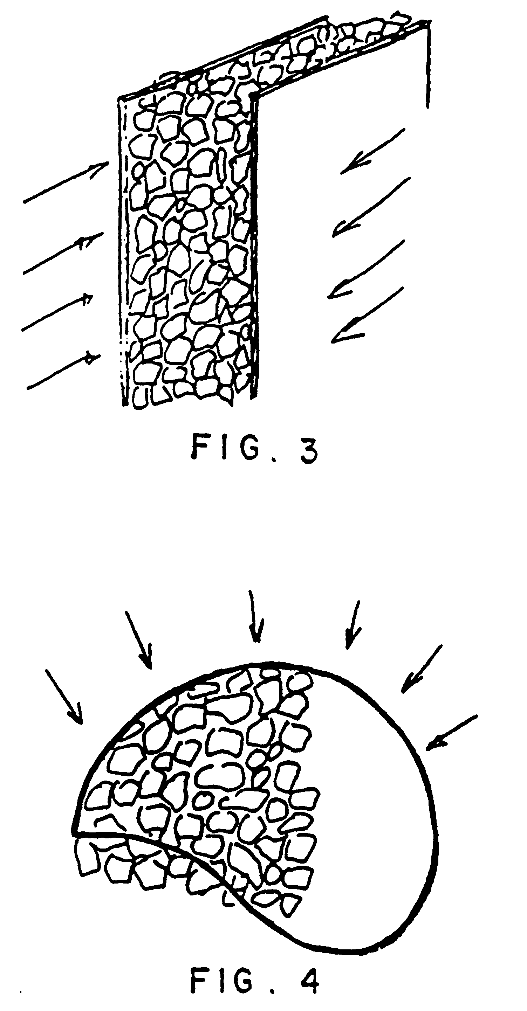

The figures 1 to 4 of the drawings represent configurations of the radiation furnace/reactor.

The sources of radiation are electrically heated surfaces, or heated by other means such as combustion of fuel (others) oil, natural gas, and can present any shape: tubular cylindrical, spherical, and plane. The geometry of those radiant surfaces will allow its accommodation in the reactor/furnace so as to optimize the distribution of the high temperatures and to operate in the highest thermal efficiency.

Figure 1 represents cylindrical surfaces, radiant internally, where the reactant solid stones/particles are within the radiant cylinder and the heat source is electricity, or else, comes from the combustion gases and flame, and is located laterally to the surface.

The figure 2 represents an externally cylindrical radiant surface where the source of heat (electricity or coming from the combustion gases and flame) is fed at the top of the cylinder and the reactant solid stones/particles are external to the radiant cylinder.

The figure 3 represents plane radiant surfaces/where the heat source (electricity or coming from the combustion gases and flame) is fed laterally and the reactant solid stones/particles remain between the radiant plane surfaces.

The figure 4 represents radiant spherical surfaces where the heat source (electricity or coming from the combustion gases and flame) is fed externally and the solid reactant stones/particles remain inside the radiant sphere.

In summary, the invention process can be accomplished at temperatures in the range 500°C to 1200°C, in batch, semi-batch, or continuously, or else in steady-state at any pressures (atmospheric, for example) and also with any size distribution range for the particles, from powder or particulates to the larger sizes in the order of 15 cm, 20 cm and larger.

The removal of the gases is done with an induction blower with heat recovery for any application, such as steam generation, gases or liquids pre-heating, pre-heating of the reactant solids, to make use of the content heat (sensible heat) in the gases at the furnace/reactor exit, still at high temperature - in the order of 400°C to 800°C.

In the treatment of pyrites, pyritic residues and iron and copper pyritic concentrates, the condensation and recovery of the condensing vapours take place and the products are of commercial/industrial value.

## Claims

1. A process for the realization of endothermic reactions for the thermal decomposition of pyrites, pyritic residues or pyritic concentrates, producing gases of high purity and residual solid products, in which the pyrites, pyritic residues or pyritic concentrates are fed to a reaction chamber, and are heated by radiation to a temperature between 500°C and 1200°C, causing the thermal decomposition thereof into said residual solid products and said gases, the gases being separated from the solids, and making it possible to recover the heat contained in the products for re-utilization, wherein the heat is obtained from the use of electricity or from the burning/combustion of a fuel done externally to the environment in which the reaction takes place.

2. A process according to claim 1, wherein the fuel is fuel oil, diesel oil, wood, charcoal, coal or natural gas.

3. A process according to claim 1, wherein the reaction environment is cylindrical, of plane surfaces, spherical, vertical or horizontal or tilted.

4. A process according to claim 1, wherein it is conducted in batch, semi-batch or continuously, or else in steady-state at any pressures.

## Patentansprüche

1. Verfahren zur Realisierung endothermer Reaktionen zur thermischen Zersetzung von Pyriten, pyritischen Rückständen oder pyritischen Konzentraten, erzeugend Gase hoher Reinheit und rückständige feste Produkte, worin die Pyrite, pyritischen Rückstände oder pyritischen Konzentrate in eine Reaktionskammer eingespeist und mittels Bestrahlung auf eine Temperatur zwischen 500 °C und 1200 °C erwärmt werden, was die thermische Zersetzung derselben in die rückständigen festen Produkte und die Gase verursacht, wobei die Gase von den Feststoffen abgetrennt werden, und was es möglich macht, die in den Produkten enthaltene Wärme zur Wiederverwendung rückzugewinnen, worin die Wärme aus der Verwendung von Elektrizität oder aus der Verbrennung eines Treibstoffes außerhalb der Umgebung, in der die Reaktion abläuft, erhalten wird.

2. Verfahren gemäß Anspruch 1, worin der Treibstoff ein Heizöl, Dieselöl, Holz, künstliche Kohle, Kohle oder Erdgas ist.

3. Verfahren gemäß Anspruch 1, worin die Reaktionsumgebung zylindrisch, aus ebenen Oberflächen, kugelförmig, vertikal oder horizontal oder schräggestellt ist.

4. Verfahren gemäß Anspruch 1, worin dieses chargenweise, halbkontinuierlich oder kontinuierlich oder auch in stationärem Zustand bei jedem Druck durchgeführt wird.

## Revendications

1. Procédé pour la conduite de réactions endothermiques pour la décomposition thermique de pyrites, de résidus pyritiques ou de concentrés pyritiques, produisant des gaz de grande pureté et des produits solides résiduels, dans lequel les pyrites, les résidus pyritiques ou les concentrés pyritiques sont introduits dans une chambre de réaction et sont chauffés par rayonnement à une température comprise dans l'intervalle de 500°C à 1200°C, ce qui provoque leur décomposition thermique en lesdits produits solides résiduels et lesdits gaz, les gaz étant séparés des matières solides, et ce qui rend possible de récupérer la chaleur présente dans les produits à des fins de réutilisation, la chaleur étant obtenue par l'utilisation d'électricité ou en brûlant un/par combustion d'un combustible extérieurement à l'environnement dans lequel la réaction a lieu.

2. Procédé suivant la revendication 1, dans lequel le combustible consiste en un fuel-oil, un combustible diesel, le bois, le charbon de bois, le charbon ou le gaz naturel.

3. Procédé suivant la revendication 1, dans lequel l'environnement de réaction est cylindrique, à surfaces planes, sphérique, vertical ou horizontal, ou bien incliné.

4. Procédé suivant la revendication 1, qui est mis en oeuvre de manière discontinue, semi-continue ou continue ou, par ailleurs, en régime constant à n'importe quelles pressions.
